(19) **Europäisches Patentamt / European Patent Office / Office européen des brevets**

(11) **EP 4 360 858 B1**

(12) **EUROPEAN PATENT SPECIFICATION**

(45) Date of publication and mention
of the grant of the patent:
**23.07.2025  Bulletin 2025/30**

(21) Application number: **22383043.1**

(22) Date of filing: **28.10.2022**

(51) International Patent Classification (IPC):
**B29C 70/54** *(2006.01)*     **B29D 99/00** *(2010.01)*
**B29C 70/30** *(2006.01)*     **B29C 70/34** *(2006.01)*

(52) Cooperative Patent Classification (CPC):
**B29C 70/545; B29C 70/34; B29D 99/0003**

(54) **STRUCTURAL ELEMENT FOR AIRCRAFTS AND METHOD FOR MANUFACTURING SAID STRUCTURAL ELEMENT**

STRUKTURELEMENT FÜR FLUGZEUGE UND VERFAHREN ZUR HERSTELLUNG DES STRUKTURELEMENTS

ÉLÉMENT STRUCTUREL POUR AÉRONEFS ET PROCÉDÉ DE FABRICATION DUDIT ÉLÉMENT STRUCTUREL

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(43) Date of publication of application:
**01.05.2024  Bulletin 2024/18**

(73) Proprietor: **AIRBUS OPERATIONS, S.L.U.**
**28906 Getafe (Madrid) (ES)**

(72) Inventors:
• **MIGUEZ CHARINES, Yolanda**
  **28906 GETAFE (Madrid) (ES)**

• **BONILLA CALDERÓN, Jesús**
  **28906 GETAFE (Madrid) (ES)**
• **DIAZ DIAZ, Victor**
  **28906 GETAFE (Madrid) (ES)**
• **CABRERA RODRIGUEZ, Pedro**
  **28906 GETAFE (Madrid) (ES)**

(74) Representative: **Herrero & Asociados, S.L.**
**Edificio Aqua - Agustín de Foxá, 4-10**
**28036 Madrid (ES)**

(56) References cited:
**EP-A1- 2 666 622     EP-A1- 2 767 388**
**EP-A1- 3 162 544**

**Description**

**Field of the invention**

The present invention relates to a structural element for aircrafts and to a method for manufacturing said structural element, in particular a structural element having a "L" or "T" shape comprising a web and a foot.

It must be pointed out that in the present specification and in the claims the term "structural element" refers, in particular, to stiffeners, stringers and the like.

**Background of the invention**

It is known in the art the use of structural elements such as stiffeners or stringers in the manufacturing of supporting surfaces of aircrafts, such as wings, horizontal tail planes, ribs, etc.

These stiffeners or stringers are usually made stacking, manually or automatically, layers to make laminates forming the stiffeners or stringers, which have a "L" or "T" shape, comprising a web and a foot.

Currently, there are several widespread forming techniques in which either the web or the foot of the stiffener or stringer is formed.

In the case of foot forming, geometrical defects, such as undulations or incorrect lengths are usually generated if the final geometry of the stiffener or stringer is to be attached on a surface with a change in thickness.

EP2767388A1 discloses a fiber reinforced plastic profile, in particular for an aircraft or spacecraft, comprising a stacked ply assembly including a plurality of stacked plies each comprising fiber material, the ply assembly having a profile cross section comprising at least one first section, at least one second section, and at least one splice section located between the at least one first section and the at least one second section, in accordance with the respective preambles of claims 1 and 8.

**Disclosure of the invention**

Therefore, an objective of the present invention is to provide a structural element for aircrafts in which said geometrical defects are not formed.

With the structural element and the method according to the present invention said disadvantages are solved, presenting other advantages that will be described below. The structural element for aircrafts and the method for manufacturing said structural element according to the present invention are defined in the corresponding independent claims. The dependent claims include additional optional features.

The structural element for aircrafts according to the present invention comprises a web, a foot and a curved portion defined between the web and the foot, the web, the foot and the curved portion comprising at least:

- first layers with fibers defining a first orientation; and
- second layers with fibers defining a second orientation,

wherein the first layers comprise a plurality of gaps at the foot and/or the curved portion.

Preferably, the structural element is elongated and defines a length, the first orientation of the first layers being a 0° orientation with respect to the length of the structural element, i.e., the fibers of the first layers are parallel with respect to the longitudinal axis of the structural element.

Furthermore, the second orientation of the second layers is preferably a ± 45° orientation with respect to the length of the structural element.

The structural element for aircrafts according to the present invention can also comprise third layers with fibers defining a third orientation. For example, the third orientation of the third layers can be a 90° orientation with respect to the length of the structural element, i.e., the fibers of the third layers are perpendicular with respect to the longitudinal axis of the structural element.

Preferably, the gaps of the first layers are disposed perpendicularly with respect to the orientation of the fibers of said first layers.

The gaps of a first layer are offset with respect to the gaps of all the rest of first layers.

According to a preferred embodiment, the gaps can have a width between 1.5 and 2 mm.

The method for manufacturing a structural element as described previously comprises the following steps:

- stacking a plurality of first and second layers;
- cutting a plurality of gaps in the first layers in a zone that will form the foot and/or the curved portion;
- cutting a contour of the stacked first and second layers; and

- shaping the stacked layers.

Preferably, the shaping of the stacked layers is done forming a foot in the stringer or stiffener.

The structural element and the method according to the present invention permit the adaptation of the first layers in the first orientation of the foot of the structural element, minimizing the structural impact on the structural element and without the need for postforming operations to eliminate defects.

It also permits the manufacturing of more complex geometries, free of defects.

**Brief description of the drawings**

For better understanding of what has been disclosed, some drawings in which, schematically and only by way of a non-limiting example, a practical case of embodiment is shown.

Figure 1 is a cross-sectional view of a structural element for aircrafts according to the present invention;

Figure 2 is a section view along line II-II in Figure 1; and

Figure 3 is a side elevation view of the structural element for aircrafts according to the present invention attached to a surface with a change in thickness.

**Description of a preferred embodiment**

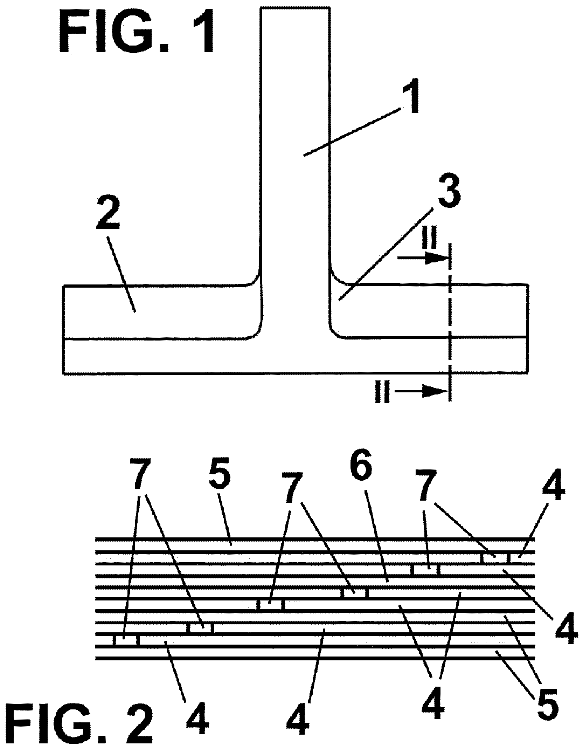

In Figure 1 a structural element for aircrafts, such as a stiffener or stringer, according to the present invention is shown, comprising a web 1 and a foot 2 defining a curved portion 3, or radius, in the contact portion between them, both the web 1 and the foot 2 made by a plurality of layers with different orientations.

The shape in cross-section of the structural element according to the present invention can be a "L" or "T" shape.

Furthermore, each layer comprises fibers which define the orientation with respect to the length of the structural element.

In particular, the layers forming the structural element are preferably:

- first layers 4 with a first orientation, such as a 0° orientation;
- second layers 5 with a second orientation, such as a $\pm$ 45° orientation; and
- third layers 6 with a third orientation, such as a 90° orientation.

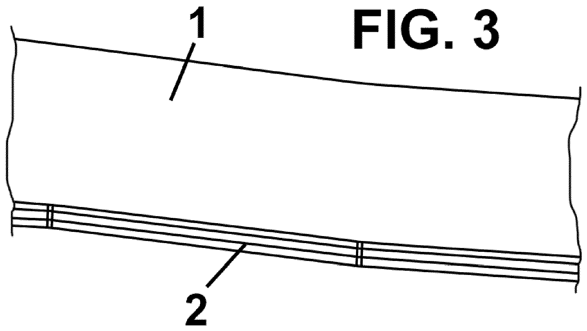

According to the present invention, the first layers 4 of the foot 2 comprise gaps 7, shown in Figures 2 and 3 for permitting the attachment of the structural element of the present invention to surfaces with changes in thickness with no geometrical defects, because the gaps 7 permit to conform the shape of the foot 2 to the shape of the surface to which the structural element is attached.

The gaps 7 in the first layers, e.g., which a width from 1.5 and 2 mm, are needed because the fibers of the layers do not stretch or shrink, but the layers must be deformed increasing its length. However, in the second and third layers 5, 6 the gaps 7 are not necessary, because they can be adapted to different geometries.

Furthermore, the gaps 7 of the first layers 4 are disposed perpendicularly with respect to the orientation of the fibers of the said first layers 4.

According to a preferred embodiment, the method for manufacturing a structural element according to the present invention is the following.

First, a stacking of the layers forming the structural element is made, which can be done manually or automatically.

The first layers 4, with an orientation 0° with respect to the length of the structural element are cut forming gaps 7, with a width, e.g., comprised between 1.5 and 2 mm, so that the overlapping of the first layers 4 is prevented.

Only the first layers are cut, because the second and layers 5, 6, e.g., with an orientation of 90° and $\pm$ 45° are able to adapt to the different geometries.

The distance between the different gaps 7 within the same first layer 4 and in adjacent first layers 4 will depend on the total length of the structural element and the amount of variations with respect to the plane of the surface on which the structural element is attached.

Longitudinally, the gaps 7 should not exceed the curved portion 3 of the structural element, i.e., they should not reach the web 1, in order to minimize the structural impact of these gaps 7 on the structural element. The gaps 7 of one first layer 4 are offset with respect to the gaps 7 of all the rest of first layers 4.

As the first layers 4 are offset, the first layer 4 firstly stacked should have the gaps 7 at a distance x from the beginning of the foot 2, and the following first layers 4 should end at:

$$x + (\text{length of curved portion} / (\text{number of first layers} - 1))$$

This offset improves the quality of the structural element but sets the stagger between layers at 0°.

Then, the contour of the stacked layers is cut to adjust it to its final geometry, as is usually done in this kind of methods.

In particular, the first layers 4 are cut in the foot and radius area for achieving the total length of the layers, including fibers and gaps, to be equal to the length of the surface section where the stringer is going to be bonded.

The gaps between fibers in the same layer are achieved cutting and continuing laying up the layers.

As shown in Fig. 3, the required length of the fibers of the first layers 4 in the web 1 is shorter than in the foot 2, and to achieve the needed length it is necessary to cut the fibers.

Finally, after cutting, the stacked layers are shaped to achieve the final geometry, forming the stringer or stiffener foot, of the structural element that will be consolidated during a curing cycle. This shaping step can be done by rollers, presses, membranes, or the like.

**Claims**

1. Structural element for aircrafts, comprising a web (1), a foot (2) and a curved portion (3) defined between the web (1) and the foot (2),
   the web (1), the foot (2) and the curved portion (3) comprising at least:

   first layers (4) with fibers defining a first orientation; and
   second layers (5) with fibers defining a second orientation,
   the first layers (4) comprising a plurality of gaps (7) at the foot (2) and/or the curved portion (3),
   **characterized in that** the gaps (7) of a first layer (4) are offset with respect to the gaps (7) of all the rest of first layers (4).

2. Structural element for aircrafts according to claim 1, wherein the structural element is elongated and defines a length, the first orientation of the first layers (4) being a 0° orientation with respect to the length of the structural element.

3. Structural element for aircrafts according to claim 1 or 2, wherein the structural element is elongated and defines a length, the second orientation of the second layers (5) being a $\pm$ 45° orientation with respect to the length of the structural element.

4. Structural element for aircrafts according to anyone of the previous claims, wherein it also comprises third layers (6) with fibers defining a third orientation.

5. Structural element for aircrafts according to claim 4, wherein the structural element is elongated and defines a length, the third orientation of the third layers (6) being a 90° orientation with respect to the length of the structural element.

6. Structural element for aircrafts according to anyone of the previous claims, wherein the gaps (7) have a width between 1.5 and 2 mm.

7. Structural element for aircrafts according to anyone of the previous claims, wherein the gaps (7) of the first layers (4) are disposed perpendicularly with respect to the orientation of the fibers of the said first layers (4).

8. Method for manufacturing a structural element, the structural element comprising a web (1), a foot (2) and a curved portion (3) defined between the web (1) and the foot (2),
   the web (1), the foot (2) and the curved portion (3) comprising at least:

   first layers (4) with fibers defining a first orientation; and
   second layers (5) with fibers defining a second orientation,
   comprising the following steps:

   - stacking a plurality of first and second layers (4, 5);
   - cutting a plurality of gaps (7) in the first layers (4) in a zone that will form the foot (2) and/or the curved portion (3), wherein the gaps (7) of a first layer (4) are offset with respect to the gaps (7) of all the rest of first layers (4);
- cutting a contour of the stacked first and second layers (4, 5); and
- shaping the stacked layers (4, 5).

**9.** Method for manufacturing a structural element for aircrafts according to claim 8, wherein the gaps (7) cut in the first layers (4) have a width between 1.5 and 2 mm.


**Patentansprüche**

**1.** Strukturelement für Flugzeuge, das einen Steg (1), einen Fuß (2) und einen gekrümmten Abschnitt (3) umfasst, der zwischen dem Steg (1) und dem Fuß (2) definiert ist,
wobei der Steg (1), der Fuß (2) und der gekrümmte Abschnitt (3) mindestens Folgendes umfassen:

erste Lagen (4) mit Fasern, die eine erste Ausrichtung definieren; und
zweite Lagen (5) mit Fasern, die eine zweite Ausrichtung definieren,
wobei die ersten Lagen (4) eine Vielzahl von Lücken (7) am Fuß (2) und/oder dem gekrümmten Abschnitt (3) umfassen,
**dadurch gekennzeichnet, dass** die Lücken (7) einer ersten Lage (4) in Bezug auf die Lücken (7) aller übrigen ersten Lagen (4) versetzt sind.

**2.** Strukturelement für Flugzeuge nach Anspruch 1, wobei das Strukturelement langgestreckt ist und eine Länge definiert, wobei die erste Ausrichtung der ersten Lagen (4) eine 0°-Ausrichtung in Bezug auf die Länge des Strukturelements ist.

**3.** Strukturelement für Flugzeuge nach Anspruch 1 oder 2, wobei das Strukturelement länglich ist und eine Länge definiert, wobei die zweite Ausrichtung der zweiten Lagen (5) eine 45°-Ausrichtung in Bezug auf die Länge des Strukturelements ist.

**4.** Strukturelement für Flugzeuge nach einem der vorhergehenden Ansprüche, **dadurch gekennzeichnet, dass** es auch dritte Lagen (6) mit Fasern umfasst, die eine dritte Ausrichtung definieren.

**5.** Strukturelement für Flugzeuge nach Anspruch 4, wobei das Strukturelement langgestreckt ist und eine Länge definiert, wobei die dritte Ausrichtung der dritten Lagen (6) eine 90°-Ausrichtung in Bezug auf die Länge des Strukturelements ist.

**6.** Strukturelement für Flugzeuge nach einem der vorhergehenden Ansprüche, wobei die Lücken (7) eine Breite zwischen 1,5 und 2 mm aufweisen.

**7.** Strukturelement für Flugzeuge nach einem der vorhergehenden Ansprüche, **dadurch gekennzeichnet, dass** die Lücken (7) der ersten Lagen (4) senkrecht zur Ausrichtung der Fasern der ersten Lagen (4) angeordnet sind.

**8.** Verfahren zur Herstellung eines Strukturelements, wobei das Strukturelement folgendes umfasst: einen Steg (1), einen Fuß (2) und einen gekrümmten Abschnitt (3), der zwischen dem Steg (1) und dem Fuß (2) definiert ist,
wobei der Steg (1), der Fuß (2) und der gekrümmte Abschnitt (3) mindestens Folgendes umfassen:

erste Lagen (4) mit Fasern, die eine erste Ausrichtung definieren; und
zweite Lagen (5) mit Fasern, die eine zweite Ausrichtung definieren,
wobei das Verfahren die folgenden Schritte umfasst:

- Stapeln einer Vielzahl von ersten und zweiten Lagen (4, 5);
- Schneiden einer Vielzahl von Lücken (7) in die ersten Lagen (4) in einer Zone, die den Fuß (2) und/oder den gekrümmten Abschnitt (3) bilden wird, wobei die Lücken (7) einer ersten Lage (4) in Bezug auf die Lücken (7) aller übrigen ersten Lagen (4) versetzt sind;
- Schneiden einer Kontur der gestapelten ersten und zweiten Lagen (4, 5); und
- Formgebung der gestapelten Lagen (4, 5).

**9.** Verfahren zur Herstellung eines Strukturelements für Flugzeuge nach Anspruch 8, wobei die in die ersten Lagen (4) geschnittenen Lücken (7) eine Breite zwischen 1,5 und 2 mm aufweisen.

**Revendications**

1. Élément structurel pour aéronefs, comprenant une âme (1), un pied (2) et une partie incurvée (3) définie entre l'âme (1) et le pied (2),
   l'âme (1), le pied (2) et la partie incurvée (3) comprenant au moins :

   des premières couches (4) avec des fibres définissant une première orientation ; et
   des deuxièmes couches (5) avec des fibres définissant une deuxième orientation,
   les premières couches (4) comprenant une pluralité d'espaces (7) au niveau du pied (2) et/ou de la partie incurvée (3),
   **caractérisé en ce que** les espaces (7) d'une première couche (4) sont décalés par rapport aux espaces (7) de tout le reste de premières couches (4).

2. Élément structurel pour aéronefs selon la revendication 1, dans lequel l'élément structurel est allongé et définit une longueur, la première orientation des premières couches (4) étant une orientation à 0° par rapport à la longueur de l'élément structurel.

3. Élément structurel pour aéronefs selon la revendication 1 ou 2, dans lequel l'élément structurel est allongé et définit une longueur, la deuxième orientation des deuxièmes couches (5) étant une orientation à $\pm$ 45° par rapport à la longueur de l'élément structurel.

4. Élément structurel pour aéronefs selon l'une quelconque des revendications précédentes, dans lequel il comprend également des troisièmes couches (6) avec des fibres définissant une troisième orientation.

5. Élément structurel pour aéronefs selon la revendication 4, dans lequel l'élément structurel est allongé et définit une longueur, la troisième orientation des troisièmes couches (6) étant une orientation à 90° par rapport à la longueur de l'élément structurel.

6. Élément structurel pour aéronefs selon l'une quelconque des revendications précédentes, dans lequel les espaces (7) présentent une largeur entre 1,5 et 2 mm.

7. Élément structurel pour aéronefs selon l'une quelconque des revendications précédentes, dans lequel les espaces (7) des premières couches (4) sont disposés perpendiculairement par rapport à l'orientation des fibres desdites premières couches (4).

8. Procédé de fabrication d'un élément structurel, l'élément structurel comprenant une âme (1), un pied (2) et une partie incurvée (3) définie entre l'âme (1) et le pied (2),
   l'âme (1), le pied (2) et la partie incurvée (3) comprenant au moins :

   des premières couches (4) avec des fibres définissant une première orientation ; et
   des deuxièmes couches (5) avec des fibres définissant une deuxième orientation,
   comprenant les étapes suivantes consistant à :

   - empiler une pluralité de premières et deuxièmes couches (4, 5) ;
   - découper une pluralité d'espaces (7) dans les premières couches (4) dans une zone qui formera le pied (2) et/ou la partie incurvée (3), dans laquelle les espaces (7) d'une première couche (4) sont décalés par rapport aux espaces (7) de tout le reste de premières couches (4) ;
   - découper un contour des premières et deuxièmes couches (4, 5) empilées ; et
   - façonner les couches (4, 5) empilées.

9. Procédé de fabrication d'un élément structurel pour aéronefs selon la revendication 8, dans lequel les espaces (7) découpés dans les premières couches (4) présentent une largeur entre 1,5 et 2 mm.

# FIG. 1

1

2

3

# FIG. 2

7  5  7  6  7  4

4  4  4  5

4  4

FIG. 3

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2767388 A1